Europäisches Patentamt
European Patent Office
Office européen des brevets

(11) Publication number: **0 219 602 A2**

# EUROPEAN PATENT APPLICATION

(21) Application number: 86106803.9

(22) Date of filing: 20.05.86

(51) Int. Cl.[4]: G01N 27/62

(30) Priority: 01.08.85 US 761250

(43) Date of publication of application: 29.04.87 Bulletin 87/18

(84) Designated Contracting States: DE GB

(71) Applicant: ALLIED CORPORATION
Columbia Road and Park Avenue P.O. Box 2245R (Law Dept.)
Morristown New Jersey 07960(US)

(72) Inventor: Spangler, Glenn Edward c/o Allied Corporation
P.O. Box 2445R Columbia Rd. Park Ave.
Morristown, N.J. 07960(US)
Inventor: Campbell , Donald Noble c/o Allied Corporation
P.O. Box 2445R Columbia Rd. Park Ave.
Morristown, N.J. 07960(US)

(74) Representative: Brullé, Jean et al
Service Brevets Bendix 44, rue François 1er
F-75008 Paris(FR)

## (54) Ionization detector.

(57) An ionization detector (10) is described for ionizing and detecting one or more selected gas constituents in an ambient gas (12) comprising a reaction region (28), a source of purified carrier gas (24), a membrane (22) for passing the selected gas constituents, a source (30) for generating ions in the reaction region (28), a recombination region (35) including at least one passageway (37), and a collector (44) for neutralizing ions. Further, the specificity of the detector (10) may be increased by introducing various reagent vapor additives (64) into the carrier gas (24). The invention overcomes the problem of detecting thioethers, such as blister agents, mustard and lewisite in particular, which have low proton affinities and cannot be detected using ion molecule reactions in ambient air in an ionization detector.

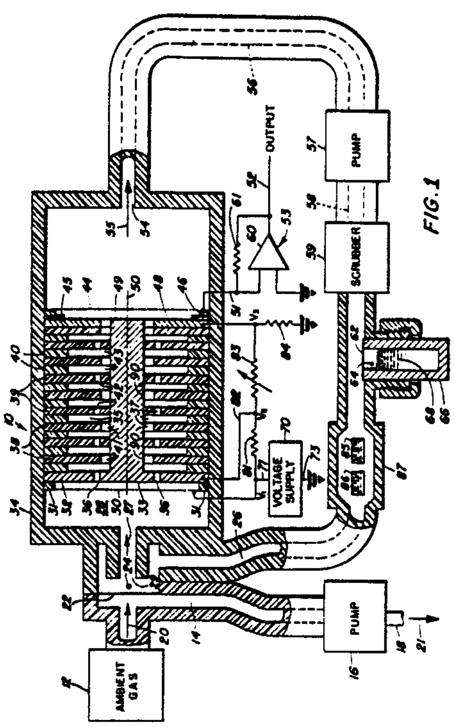


FIG.1

EP 0 219 602 A2

# IONIZATION DETECTOR

## Cross Reference to Related Application

Cross reference is made to U.S. Application Serial No. 535,451 filed on September 23, 1983 entitled "Ion Mobility Spectrometer System with Improved Specificity" by G. E. Spangler and J. N. Cox and assigned to the assignee herein which is directed to an ion mobility spectrometer with means for adding a chemical reagent vapor, for example, acetone and/or carbon tetrachloride to the carrier gas to improve the selectivity of the ion mobility spectrometer and to eliminate the adverse affects of interferring vapors.

## Background of the Invention

### Field of the Invention:

This invention relates to ionization detectors and more particularly to the use of a membrane inlet and purified air alone or with one or more chemical reagent vapors for detecting thioethers such as mustard gas.

### Description of the Prior Art:

The ionization detector was described in U.S. Patent 3,835,328 which issued on September 10, 1974 to Harris et al. An ionization detector normally includes a reaction region having an ionization source therein for ionizing the carrier gas for forming reactant ions which react with a sample gas which is introduced into the reaction region to form product ions. A recombination region is provided normally by providing a long circuitous path which the gas and ions flow therethrough to a collector, such as a mesh or screen which neutralizes the ions. In the recombination region, the heavy ions are literally dragged along by the gas velocity in the direction of flow, while lighter ions have more frequent collisions with the side walls, gas and ions resulting in their loss. The heavy ions that survive arrive at the collector to generate an electric current as they are neutralized. The ionization detector operates at atmospheric pressure and is used for detecting chemical warfare agents such as nerve gas. For reasons to be explained, no response is obtained from sample gases of thioethers, mustard gas, in the present ionization detectors.

In a publication by W. Jost, Diffusion, Academic Press, N. Y., 1960, pp. 51-54, a mathematical solution is given for the flow of ions in a tube. This theory can be modified to describe the ion separation process which occurs in the recombination region of the ionization detector.

A more recent improvement to the ionization detector is described in U.S. patent 4,075,550 which issued on February 1, 1978 to B. W. Castleman and B. C. Schluter. In U.S. Patent 4,075,550, electrical compensation was provided for variations in radiation source intensity and in carrier gas flow rate. Electrical compensation was provided by obtaining a signal from two electrical probes inserted into an isolated carrier gas flow from the reaction region.

In U.S. Patent 4,311,699 which issued on January 19, 1982 to G. E. Spangler an ion mobility spectrometer was described utilizing a purified carrier gas and a membrane. The membrane interface at the inlet to the ion mobility spectrometer can be made selective to specific gas compounds which would enable them to pass through the membrane into the carrier gas. A similar modification can be made to the ionization detector.

It is therefore desirable to provide a membrane for selectively passing organic compounds (gas constituents) into the reaction region of an ionization detector.

It is further desirable to provide purified air or gas to the reaction region of the ionization detector.

It is further desirable to provide a membrane at the inlet of an ionization detector for passing selected gas constituents from the ambient air into the reaction region of an ionization detector.

It is further desirable to provide a purified stream of air or gas which may remove selected gas constituents from the interior surface of a membrane whose exterior surface is exposed to ambient air and for flowing the carrier gas and gas constituents into the reaction and recombination regions of an ionization detector.

It is further desirable to collect the gas constituents, ion products and carrier gas at the outlet of the ionization detector for recirculation through a purification scrubber to provide a source of purified air or carrier gas to the reaction region.

It is further desirable to provide certain reagent gases such as acetone in the carrier gas to prevent the formation of positive ion products from interfering vapors which may enter the ionization detector.

It is further desirable to provide certain reagent gases such as carbon tetrachloride in the carrier gas to prevent the formation of negative ion products from interfering vapors which may enter the ionization detector.

## Summary of the Invention

An apparatus and method is described for ionizing and detecting one or more selected gas constituents in an ambient gas comprising a reaction region, a stream of purified carrier gas flowing into said reaction region, an inlet for introducing selected gas constituents into the reaction region, an ionization source, for example, a radioactive foil or mesh in the reaction region for generating ionizing radiation in the reaction region to form ion products from the carrier gas and the selected gas constituents, a recombination region including at least one passageway coupled to the reaction region to permit the carrier gas, the selected gas constituents and the ion products to flow therethrough, whereby ion losses due to recombination and neutralization reactions occur, a collector positioned at the outlet of the at least one passageway to neutralize ions collected thereon, whereby an output current from the collector provides an indication of the ions neutralized.

The invention further includes a method for detecting halogenated thioethers including mustard gas in an ionization detector comprising the steps of introducing a purified air or gas into the reaction region, introducing the thioether into the reaction region, forming reactant ions from the carrier gas including $H_3O^+$ whereby the thioether is ionized via proton transfer reactions to form positive ion products, flowing the ion products, carrier gas and thioethers through a recombination/neutralization region, and collecting the ion products on a collector, whereby the ion products are neutralized generating a current indicative of the thioethers.

The invention further provides a method for detecting thioethers as above, except where the reactant ion is $CO_4^-$ whereby the thioether is ionized via electrophilic attachment reactions to form negative ion products.

The invention further provides introducing acetone into the carrier gas for removing positive ion products of interferences i.e. compounds not of interest from the reaction region.

The invention further provides introducing carbon tetrachloride or similar chlorinated compound into the carrier gas for removing negative ion products of interferences from the reaction region.

## Brief Description of the Drawing

Fig. 1 is a cross sectional view and - schematic diagram of one embodiment of the invention.

Figs. 2 and 3 are curves depicting the relationship between variables in an equation applicable to ionization detectors.

## Description of the Preferred Embodiment

Referring to Fig. 1, an ionization detector 10 is shown for ionizing and detecting one or more selected gas constituents in an ambient gas 12. Ambient gas 12 passes through passageway 14 through pump 16 and out outlet 18 as shown by arrows 20 and 21. Membrane 22 forms a portion of the sidewall of passageway 14 which selectively passes sample gas constituents contained in ambient gas 12.

Membrane 22 may be a porous diffusion-type membrane such as microporous tetrafluoroethylene (TFE) and microporous polypropylene, which depend upon Knudsen diffusion for sample transport. Porous membranes however pass oxides of nitrogen and ammonia which are undesirable. Alternatively, membrane 22 may be of the non-porous semipermeable-type, such as dimethylsilicone, dimethylpolysiloxane, copolymers of dimethylsilicone and polycarbonate, dimethyl-methylvinylpolysiloxane, etc. which depend on the solubility of the sample in the membrane for sample transport through the membrane. Nonporous membranes are preferred over porous membranes because they block, for example, oxides of nitrogen and ammonia. Both porous and non-porous membranes can be impregnated with reagents such as might be commonly used as liquid phases in the field of gas liquid chromotography to alter the solubility of non-porous membranes and to convert porous membranes to non-porous membranes. Membrane 22, while functioning to pass selected organic gas constituents, also functions to reject or minimize the passage of interferring gas constituents such as ammonia, $NH_3$ and nitrogen dioxide, nitrogen trioxide, etc., $NO_x$ . Gas constituents such as ammonia have a high proton affinity which attract protons to itself and away from other gas constituents (e.g. chlorinated thieothers) desired to be detected. Oxides of nitrogen have a high electron affinity which attract electrons to itself and away from other gas constituents (e.g. chlorinated thioethers) desired to be detected.

The gas constituents passing through membrane 22 pass into a purified carrier gas 24 flowing in passageway 26. Purified carrier gas may be, for example, dry nitrogen or purified air having less than ten parts per million (10 PPM) of water and less than 1.0 part per billion (1 PPB) of ammonia and less than 1.0 PPB of nitric and nitrous oxides . The selected gas constituents and purified carrier

gas 24 pass into reaction region 28 by means of inlet 29 as shown by arrow 27.

Reaction region 28 includes an ionization source 30 which may be, for example, nickle 63, a source of $\beta$ particles. Other ionizers such as radioactive tritium or americium, photoionization, corona discharge or alkali salt sources might also be used. As known in the art, the $\beta$ particles primarily ionize the molecules of the carrier gas and the ionized carrier gas molecules ionize the sample molecules or selected gas constituents due to ion exchanges to form ion products. As shown in Fig. 1 ionization source 30 may extend across reaction region 28, be supported by insulating ring 31, spaced from manifold surface 33 of manifold 32, and be circular in shape and electrically conducting. Manifold 32 may be fitted on the interior of housing 34, which may be cylindrical in shape and non-conducting and wherein reaction region 28 is formed between housing 34 and surface 33 of manifold 32.

A recombination/neutralization region 35 extends between surface 33 and collector screen 44. Apertures 36 in manifold 32 provide a plurality of passageways 37 from reaction region 28 to collector screen 44. Adjacent manifold 32 are a plurality of baffles of a first type 38 and of a second type 39. The baffles are spaced apart from one another by washers 40. The baffles 38 and 39 and washers 40 form circular rings with their outside edges fitting against housing 34 and are constituted of non-conducting material such as Teflon. Baffles 38 have apertures 41 for passing gas therethrough. Baffles 39 have apertures 42 for passing gas therethrough. The gas spaces 43 provided by washers 40 and apertures 41 and 42 provide one or more passageways 37 for the carrier gas, the selected gas constituents and the ion products to flow therethrough with the heavier or less mobile ion products surviving to reach collector screen 44.

Manifold 32 has a cylindrical conducting portion 49 extending along the center of baffles 38 and 39, and washers 40 which may be mechanically held together by conducting ring 48 which may or may not be threaded onto cylindrical portion 49. Cylindrical portion 49 functions to provide conductive portions 90 as part of the walls of passageways 37 for neutralization of ions impinging thereon. The cylindrical portion 49 of manifold 32 having a center axis shown by reference line 50 may fit flush or gas tight with the interior edge of baffles 38 and 39 except where apertures 41 are present. Collector screen 44 may be attached to supporting ring 46 which may be conducting having an outside edge which is fitted against housing 34. Supporting ring 46 is electrically isolated from conducting ring or washer 48 by insulating ring or washer 45. When the remaining ion products reach collector screen 44, positive and/or negative charge is collected and neutralized by collector screen 44 generating current which is carried over lead 51 to an input of electrometer detector 53, which amplifies and measures the current. Collector screen 44, as described herein, may be a Faraday plate. Electrometer detector 53 may, for example, include an operational amplifier 60 having a resistor 61 coupled between its input on lead 51 and its output on lead 52. A second input to amplifier 53 may be coupled to ground.

Ionization source 30 is electrically coupled over lead 71 to voltage supply 70 having a voltage $V_1$ with respect to ground. Voltage supply 70 is also coupled over lead 71 through resistor 81 over lead 82 to manifold 32. Lead 82 is coupled through potentiometer 83 to washer 48. Washer 48 is coupled through resistor 84 to ground potential. Voltage supply 70 is also coupled over lead 73 to ground potential. Voltage supply 70 functions to place a predetermined voltage $V_1$ on ionization source 30, a predetermined voltage $V_2$ on manifold 32 and conducting portion 49 and a predetermined volage $V_3$ on conducting ring 48. Voltage $V_2$ on lead 82 and voltage $V_3$ on conducting ring 48 may be determined by the value of resistors 81, 84, and potentiometer 83. Potentiometer 83 allows for adjustment of voltage $V_2$ with respect to voltage $V_3$. The voltage $V_3$ appears between conducting ring 48 and collector screen 44 which moves the ion products in the electric field to collector screen 44 where they are neutralized. Voltage $V_2$-$V_3$ is small providing only a very weak electric field, if any, in apertures 41 and 42 and spaces between washers 40 and conducting portion 49.

Positive and negative ion separation occurs in the reaction region 28 between ionization source 30 and manifold surface 33 where the electric field caused by the difference in potential $V_1$-$V_2$ may prevent either positive or negative ions from entering manifold 32, while attracting ions of opposite polarity. In the recombination/neutralization region 35, principally between manifold surface 33 - (apertures 36) and conducting ring 48, the heavy ions (mustard and nerve, for example) are dragged along passageways 37 by the carrier gas 24 flow. The heavy ions have less collisions with other ions, molecules and walls, while the lighter ions have more collisions with other ions, molecules and walls of passageways 37. The lighter ions are more likely to be neutralized by collision with the surface of conducting portions 90 of passageways 37.

After ion products are neutralized by collector screen 44, the carrier gas and selected gas constituents flow through outlet 54, as shown by arrow 55, through passageway 56 to pump 57. Pump 57 functions to maintain a predetermined gas flow through passageways 37 formed by apertures 36, 41 and 42 and spaces 43 to collector screen 44.

The predetermined gas flow may be in the range from 100 cc/min. to 2000 cc/min. Pump 57 pumps gas through passageway 58 to an inlet of scrubber 59. Scrubber 59 functions to remove unwanted gas constituents and any remaining ion products to provide a purified carrier gas 24 at its outlet to passageway 26.

Passageway 26 may have a portion of its sidewalls exposed to membrane 62. Membrane 62 may be permeable to certain gases 64. Membrane 62 may be fitted over a reservoir well 66 having a liquid 68 therein which may be, for example, acetone. The volume above the surface of liquid 68 is gas 64 determined by the vapor pressure of liquid 68. Gas 64 passes through membrane 62 into purified carrier gas 24. Gas 64 may be selected to have a particular proton affinity which would attach to protons in reaction region 28, preventing the proton attachment to gas constituents of lesser proton affinity. The introduction of acetone into purified gas 24 prevents positive ion current to develop from interferences and the chlorinated thioether (mustard) sample. However, it does not affect the negative ion response to mustard. Acetone may have a concentration in purified carrier gas 24 in the range from 1 PPB to 1 PPM. A typical value for operation may be 10 PPB acetone. In addition to acetone (dimethyl ketone), ammonia and other ketones (for example cyclohexanone) may be used. Further, other compounds containing carbonyl, sulfoxide and phosphoryl groups may be used as a reagent in place of acetone.

Liquid 68 may also contain, for example, carbon tetrachloride to generate chloride anions in reaction region 28, preventing electron attachment to interferring gas constituents of lesser electron affinity. Carbon tetrachloride may have a concentration in purified carrier gas 24 in the range from 1 PPB to 1 PPM. In addition to carbon tetrachloride, other chlorinated compounds may be used, for example, methylene chloride, chloroform - (trichloromethane), chlorobenzene and dichlorobenzene.

Alternatively, one or more permeation tubes, for example, 85 and 86 in passageway 26 or chamber 87 may be used to introduce, for example, acetone and carbon tetrachloride, respectively, into purified carrier gas 24. A permeation tube is generally made by sealing liquid chemicals into FEP Teflon tubes of known dimensions having a predetermined wall thickness. Permeation tubes may be obtained from various vendors such as Analytical Instrument Development, Inc., Rt. 41 and Newark Road, Avondale, Pa. 19311.

For modeling purposes, recombination region 35 can be thought of simply as a tube or passageway of constant diameter with apertures 36 in surface 33 of manifold 32 at one end and conducting ring 48 at the other end. Manifold 32 and conducting portion 49 is in electrical contact with the tube or passageway but the collector screen 44 is normally at a different potential. The motion of the ions created by the ionization source 30 is controlled by diffusion and convection after they enter the recombination region. The equation for the stationary state ion concentration n is given by equation (1).

$$D\left(\frac{d^2n}{dr^2} + \frac{1}{r}\frac{dn}{dr} + \frac{d^2n}{dz^2}\right) - \left((1-D_g)V_d + D_g\frac{\dot{Q}}{A}\right)\frac{dn}{dz} = \alpha\beta nn' \qquad (1)$$

In equation (1), D is the diffusion coefficient, $D_g$ is the drag coefficient, $V_d$ (in cm/sec) is the drift velocity of the ions in the electric field applied along the length of the passageway, $\dot{Q}$ (in cc/sec or cc/min) is the carrier gas flow rate, A is the cross sectional area of the passageway, $\alpha$ is the recombination coefficient, $\beta$ is a weighting factor for recombination of ions, depending on the electric field, and n' is the charge of opposite polarity with which the ions of interest recombine. Equation (1) may be solved under the following boundary conditions; $n = n_0$ at manifold 32 and $n = 0$ at $r = r_0$, the outside wall of the passageway or tube. Also, n equals 0 at collector screen 44. Using standard separation of variable techniques, it can be shown that the ion concentration n (in ion/cc) satisfies equation (2), which nearly resembles equation 1.222 appearing in the book by W. Jost, Diffusion, Academic Press, N.Y., 1960, at page 52.

$$n = 2n_o \sum_1^{\infty} \frac{1}{\zeta_\nu J_1 (\zeta_\nu)} J_o (\zeta_\nu r/r_o)$$

$$\exp\left[\frac{V'}{2D}\left(1 - \frac{1}{V'}\sqrt{V'^2 + 4D^2\left(\frac{\zeta_\nu^2}{r_o^2} + \frac{\alpha\beta n'}{D}\right)}\right)Z\right] \quad (2)$$

Z is the distance down stream from manifold 32 in equation (2). $\zeta_\nu$ are the zeroes of the zero order Bessel function and V' is expressed in equation (3):

$V' = (1 - D_g) V_d + D_g \dot{Q}/A$ (3)

The Bessel functions can be averaged across the cross sectional area of the passageway or tube to yield $\bar{n}$ which is expressed in equation (4):

$$\bar{n} = 4n_o \sum_1^{\infty}\left(\frac{1}{\zeta_\nu 2}\right)\exp\left[\frac{V'}{2D}\left(1 - \frac{1}{V'}\sqrt{V'^2 + 4D^2\left(\frac{\zeta_\nu^2}{r_o^2} + \frac{\alpha\beta n'}{D}\right)}\right)Z\right] \quad (4)$$

The ion current collected by collector screen 44 is given by equation (5):

$I = A_{cs} \bar{n} ev'$ (5)

In equation (5) $A_{cs}$ is the cross sectional area of collector screen 44 and e is the electronic charge. n is given by equation (4) and represents the average ion concentration. V' (in cm/sec or cm/min) is given by equation (3) and represents the effective velocity of the ions.

Reviewing equation (5), the current is proportional to the average ion concentration n and to the effective velocity V' defined in equation (3).

The average ion concentration $\bar{n}$ may be increased by minimizing the effects of ion recombination. The effects of ion recombination may be minimized by making the concentration of the ions of opposite charge, n' = 0, which is accomplished by applying an electric field between radioactive source 30 and manifold 32 shown in Fig. 1. The electric field causes ions of opposite polarity to separate in opposite directions as they flow through apertures 36, 41 and 42 and spaces 43. With the ions of the same size or weight but of opposite polarity separating in the reaction region in opposite directions, ions of one charge only enter the recombination region. To further help in the reduction of recombination effects, a weak electric field, for example less than 1 volt/centimeter, can be applied between manifold 32 and conducting ring 48. However, the magnitude of the electric field between manifold 32 and conducting ring 48 must not exceed the threshold where the drift velocity $V_d$ and its term, $(1-D_g) V_d$, in equation (3) is greater than the convective flow $\dot{Q}$ and its term, $D_g \dot{Q}/A$, in equation (3), since the ionization detector 10 works on the principle that the product ions which may be heavy organic ions, arrive at collector screen 44 primarily under the influence of the convective flow $\dot{Q}$ multiplied by the drag coefficient $D_g$.

Referring to equation (4), if n' is equal to 0 than the recombination term, $\beta n'/D$ can be neglected. A reasonable value for $\zeta_\nu$ may be 2.405. With n' equal to 0 and $\zeta_\nu$ equal to 2.405, the exponential term of equation (4) becomes equation (6).

$$\exp\left[\frac{V'}{2D}\left(1 - \sqrt{1 + \frac{23.1}{r_o^2}\frac{D^2}{V'^2}}\right) Z\right] \quad (6)$$

The value of equation (6) as a function of V'/D is shown by curves 75 through 77 in Fig. 2, where the passageway length Z equals 1 cm and the radius $r_o$ of the passageway is 1 cm for curve 75, .5 cm for curve 76 and .1 cm for curve 77. The value of equation (6) as a function of V'/D is shown by curves 78 through 80 in Fig. 3, where the radius $r_o$ of the passageway is .1 cm and the length of the passageway, Z, is 1 cm for curve 78, 4 cm for curve 79 and 10 cm for curve 80. In Figs. 2 and 3, the ordinate represents V'/D and the abscissa represents the value of equation (6). As shown by curves 75-80, the value of equation (6) can be increased by increasing V'/D, or by decreasing Z.

If $V_d$ is small then V' given by equation (3) may be approximated by equation (7).

$$V' \simeq D_g \frac{\dot{Q}}{A} \qquad (7)$$

The drag coefficient $D_g$ may be related to ion mobility in the following way. From Newton's Second Law, the equation for ion motion in an electric field E is given by equation (8).

$$m \frac{d^2\vec{r}}{dt^2} + D_g \frac{d\vec{r}}{dt} - q\vec{E} = 0 \qquad (8)$$

In equation (8) m is the mass of the ion, $D_g$ is the drag coefficient for the ion through the gas, and q is the ionic charge. For constant E, $d^2r/dt^2$ equals zero. Equation (8) may then be expressed as shown in equation (9).

$$D_g \frac{d\vec{r}}{dt} = q\vec{E} \qquad (9)$$

The relationship between velocity and the electric field for an ion in a gas is given in equation (10).

$$\frac{d\vec{r}}{dt} = \vec{V} = \mu\vec{E} \qquad (10)$$

In equation (10), is the ionic mobility. Solving for the drag coefficient $D_g$ in equation (9) and by substituting it in equation (10) gives equation (11).

$D_g = q/\mu$ (11)

Thus, the drag coefficient $D_g$ is the charge q on the ion divided by its mobility $\mu$. Substituting equation (11) into equation (7) gives equation (12) where V' is inversely proportional to the ion mobility.

$V' = q\dot{Q}/\mu A$ (12)

Thus where $V_d$ is negligible, V' as defined in equation (12) is small for small ions because of high mobility, for example carrier gas ions, and large for large ions because of low mobility, for example product ions such as mustard ions. That is, the response of ionization detector 10 is selective to ions of high mass and/or large cross sections due to their low mobility $\mu$. Experimental findings in the laboratory agree with equation (12).

In operation, ionization detector 10 is useful for detecting both nerve and blister agents used in chemical warfare applications. One nerve agent is for example GB (Sarin) having a chemical structure shown in equation (13):

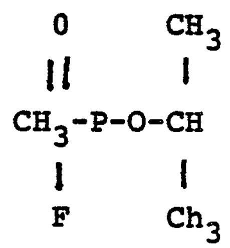

(13)

which is an organophosphonate compound. One blister agent is, for example, mustard having a chemical structure shown in equation (14).

$ClCH_2CH_2SCH_2CH_2Cl$ (14)

which is chlorinated thioether compound. Whether nerve or both nerve and blister agents are detected by ionization detector 10 depends on the composition of the carrier gas 24.

For ambient air as carrier gas 24, ion mobility spectrometry/mass spectrometric data have shown that the reactant ions generated by the radioactive source in reaction region 28 include $(H_2O)\,_nNH_4^+$ and $(H_2O)\,_nNO_x^-$. Ion/molecule reactions involving the $(H_2O)\,_nNH_4^+$ reactant ions leads to the ionization of the organophosphorous nerve agents through nucleophilic attachment reactions as shown by equation (15) for GB:

$$GB + (H_2O)\,_nNH_4^+ \rightarrow (GB)NH_4^+ + nH_2O \quad (15)$$

Similar reactions occur for other organophosphorous nerve agents and compounds. On the other hand, no ion/molecule reaction exists (by observation with a mass spectrometer) between either the $(H_2O)_nNH_4^+$ and $(H_2O)NO_x^-$ reactant ions and blister agents such as mustard. Hence only the organophosphorous nerve agents can be detected with ionization detector 10 when ambient air is used for carrier gas 24.

For purified air (less than 1.0 parts per million of water, less than 1.0 parts per billion ammonia, less than 1.0 parts per billion of $NO_x$) as carrier gas 24, ion mobility spectrometry/mass spectrometric data have shown that the reactant ions generated by the radioactive source in reaction region 28 include $(H_2O)\,_nH^+$ and $(H_2O)\,_nCO_4^-$. Ion/molecule reactions involving the $(H_2O)\,_nH^+$ reactant ions leads to the ionization of the organophosphorous nerve agents through proton transfer as shown by equation (16) for GB:

$$GB + (H_2O)_nH^+ \rightarrow (H_2O)(GB)H^+ + (n\text{-}1)H_2O \quad (16)$$

Similar reactions occur for other organophosphorous nerve agents and compounds. Similar ion/molecule reactions involving the $(H_2O)_nH^+$ reactant ions leads to the ionization of mustard through proton transfer as shown by equation (17):

$$\text{Mustard} + (H_2O)_nH^+ \rightarrow (\text{Mustard})H^+ + nH_2O \quad (17)$$

In addition, ion/molecule reactions involving the $(H_2O)_n\,CO_4^-$ reactant ions leads to the ionization of mustard through electrophilic attachment as shown by equation (18):

$$\text{Mustard} + (H_2O)_nCO_4^- \rightarrow (\text{Mustard})O_2^- + CO_2 + nH_2O \quad (18)$$

To those skilled in the art, the negative ion reactions are similar if $(H_2O)_nO_2^-$ reactant ions are involved. Hence both the organophosphorous nerve agents and the blister agents, for example mustard, can be detected with ionization detector 10 when purified air is used for carrier gas 24.

The product ions created as a result of the reactions given by equations (15) to (18) are caused to flow through passageways 37 formed by apertures 36, 41 and 42 and spaces 43 by the carrier gas 24, having a flow rate Q. The ions which pass through the recombination region are collected by collector screen 44 to provide a measurable electric current which flows in and is sensed by electrometer 53 having an output on line 52.

Using purified air for carrier gas 24, it is possible to detect nerve agents in the positive ion spectrum and mustard in both the positive and negative ion spectrum. To help in identification, it is desirable that only the nerve agents be detected in the positive ion spectrum and blister agents be detected in the negative ion spectrum. This can be accomplished by using other ionization reactions in reaction region 28 which prevents creation of positive ions from mustard. These positive ions can be eliminated by placing a predetermined liquid 68, such as acetone, in reservoir 66. Acetone vapor 64 forms above liquid 68 which permeates through membrane 62 into purified carrier gas 24. The acetone, which has the chemical structure as shown by the formula of equation (19), undergoes two ion/molecule reactions with the hydronium reactant ions as described by equations (20) and (21):

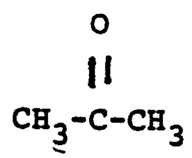

(19)

Acetone + $H_3O^+ \rightarrow$ (Acetone) $H^+$ + $H_2O$ (20)

(Acetone) $H^+$ + Acetone $\rightarrow$ (Acetone) $_2H^+$ (21)

Since the proton affinity of mustard is less than the proton affinities of the ion products yielded by the reactions of equations (20) and (21), no positive ions from mustard will be created in the presence of acetone. Thus, the positive ion signature for mustard can be eliminated by introducing acetone into carrier gas 24 without affecting the negative ionization of mustard as described by equation (18). Further, the introduction of acetone does not interfere with the positive ionization of nerve agents which undergo the reaction of equation 22 (written for GB):

$(Acetone)_2H^+$ + GB $\rightarrow$ (Acetone) $H^+$ + Acetone (22)

Thus, with the presence of acetone in carrier gas 24, mustard is negatively ionized, the nerve agents are positively ionized and the positive ionization of mustard is impossible.

Thus the advantage of acetone in purified carrier gas 24 is that ionization detector 10 responds only to nerve agents in the positive ion mode. Without acetone, the positive ions formed from mustard in accordance with equation (17) could not be differentiated from those formed from nerve agents in accordance with equation (16) for GB for example. Furthermore, no reactions exist for the negative ionization of nerve agents. Hence, adding acetone to carrier gas 24 enables ionization detector 10 to differentiate between nerve and blister agents on the basis that nerve agents are detected when the voltage $V_1$ is positive to allow transmission of positive ions and blister agents are detected when the voltage $V_1$ is negative to allow transmission of negative ions.

To add specificity to the detection of mustard, negative ions of interferring vapors can be eliminated from ionization detector 10 by placing a predetermined liquid 68, such as carbon tetrachloride, in reservoir 66. Vapors of carbon tetrachloride form above liquid 68 which permeate through membrane 62 into purified carrier gas 24. Carbon tetrachloride, which has the chemical structure as shown by the formula of equation (23):

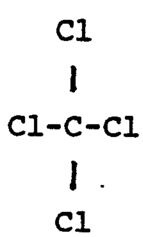

(23)

undergoes charge exchange with subsequent dissociation reactions with the oxonium reactant ions to yield chloride anions as described by equation - (24):

$(H_2O)_nO_2^-$ + Carbon Tetrachloride $\rightarrow Cl^-$ +

$O_2$ + $nH_2O$ + Radicals (24)

Since the electron affinity of the chloride anion is very high, it losses its charge to a lesser number of chemical compounds which could act as potential interferences than if the oxonium reactant ion was used. Additionally, the chloride anion can be used as a reactant to ionize mustard in accordance with equation (25):

$Cl^-$ + Mustard $\rightarrow$ (Mustard) $Cl^-$ (25)

Similar reactions exist for another blister agent known as lewisite. Thus, the addition of vapors of carbon tetrachloride to carrier gas 24 prevents the negative ionization of interferences, while at the same time allowing negative ions of blister agents, mustard and lewisite in particular. This renders ionization detector 10 more specific for the detection of blister agents.

Vapors of both acetone and carbon tetrachloride can be introduced simultaneously into carrier gas 24 without each affecting the other. This is accomplished, for example, by using two reservoir wells 66 attached at two independent locations along passgeway 26 or two permeation tubes 85 and 86. Finally, the amount of sample gas which may pass through membrane 22 is given by equation (26):

$$\text{Yield} \quad Y = \frac{P_2}{P_1} = \frac{P_r A_m P_t}{\dot{Q}\ell + P_r A_m P_t} \qquad (26)$$

In equation (26) Y is the yield. $P_1$ is the sample partial pressure at the membrane interior face. $P_2$ is the sample partial pressure at the membrane interior face. $P_r$ is the membrane permeability coefficient. $A_m$ is the membrane area. $\dot{Q}$ is the carrier gas (26) flow rate. $\ell$ is the membrane thickness and $P_t$ is the total pressure. According to equation - (26), the yield Y increases as the carrier flow rate $\dot{Q}$ decreases. For further information as to the performance of membrane 22 and for membrane materials, reference is made to U.S. Patent 4,311,669, which issued on January 19, 1982 to G. E. Spangler, the inventor herein, which is incorporated herein by reference.

However, a decrease in the carrier flow rate $\dot{Q}$ reduces the value of the effective velocity V' in equation (3). From Fig. 2, a decrease in the value of V' translates directly into a decrease in the value of equation (6), the abscissa of Fig. 2. Hence, the output signal of ionization detector 10, when normalized to the tasking concentration (the vapor concentration of the sample delivered to the detector) decreases. Consequently, a decrease in the carrier flow rate $\dot{Q}$ which leads to an increased performance of the membrane 22 also leads to a decreased performance in $\bar{n}$ according to equation (4) and a decrease in I according to equation - (5), which is the output current on line 52 from ionization detector 10. The performance of ionization detector 10 may be increased without effecting the yield of the membrane by decreasing the parameter Z (the length of the recombination region) to increase the ions $\bar{n}$ as shown in equation (4) and shown experimentally in Fig. 3 by curves 78-80, where Z is equal to 1 cm, 4 cm and 10 cm, respectively.

The invention describes an apparatus and method for ionizing and detecting one or more selected gas constituents in an ambient gas comprising a reaction region, a source of purified carrier gas coupled to the reaction region, a membrane for introducing the selected gas constituents into the reaction region through the membrane, a recombination region including at least one passageway coupled to the reaction region to permit the carrier gas, the selected gas constituents and the ion products to flow therethrough, whereby ion losses due to recombination and neutralization reactions occur, a collector positioned at the outlet of the at least one passageway to neutralize ions collected thereon, whereby an output current from the collector provides an indication of the ions neutralized.

## Claims

1. Apparatus for ionizing and detecting one or more selected gas constituents in an ambient gas - (12) comprising

a reaction region (28),

first means (30) for generating ions in said reaction

region (28),

a recombination region (35) including at least one passageway (37) having walls with conductive portions (90) therein coupled to said reaction region - (28),

a collector (44) positioned at the outlet of said at least one passageway (37),

characterized by second means (26, 29) for introducing a purified carrier gas (24) into said reaction region,

third means (22, 29) for introducing said selected gas constituents into said reaction region,

said first means forming ion products from said carrier gas (24) and said selected gas constituents,

said at least one passageway (37) permitting said carrier gas (24), said selected gas constituents and said ion products to flow therethrough, whereby ion losses occur as a result of ion recombinations and ion interactions with said conductive portions (90) of said walls,

said collector (44) neutralizing said remaining ions from said recombination region (35) whereby an output current from said collector (44) provides an indication of the remaining ions neutralized.

2. The apparatus of claim 1 further characterized by said second means (26, 29) for introducing including fourth means (62, 66, 68) for introducing acetone into said carrier gas.

3. The apparatus of claim 2 further characterized by said second means (26, 29) for introducing including fifth means (62, 66, 68) for introducing carbon tetrachloride into said carrier gas (24).

4. The apparatus of claim 1 further characterized by said third means (22, 29) for introducing said selected gas constituents including a membrane (22) having spaced apart inner and outer surfaces positioned over an inlet (29) of said reaction region (28).

5.The apparatus of claim 1 further characterized by said second means (26, 29) for introducing including fourth means (62, 66, 68) for introducing a reagent into said carrier gas (24).

6. The apparatus of claim 5 further characterized by said reagent being selected from the group consisting of ammonia, or a ketone, carbonyl, sulfoxide and phosphoryl compounds.

7. The apparatus of claim 5 further characterized by said reagent including cyclohexanone.

8. The apparatus of claim 5 further characterized by said reagent including a chlorinated compound.

9. The apparatus of claim 5 further characterized by said reagent being selected from the group consisting of methylene chloride, trichloromethane, chlorobenzene and dichlorobenzene.

10. A method for ionizing and detecting one or more selected gas constituents in an ambient gas - (12) comprising the steps of:

introducing a purified carrier gas (24) having less than 10 PPM of water, less than 1.0 PPB of oxides of nitrogen and less than 1 PPB of ammonia into a reaction region (28),

introducing said selected gas constituents into said reaction region (28),

generating ions in said reaction region (28) to form ion products from said carrier gas (24) and said selected gas constituents,

flowing said carrier gas (24), said selected gas constituents and said ion products through at least one passageway (37) having walls with conductive portions (90) therein, whereby ion losses occur due to ion recombinations and ion neutralization with said conductive portions (90) of said walls,

collecting the remaining ions at the outlet of said at least one passageway (37) to neutralize said ions to provide an output current indicative of the ions neutralized.

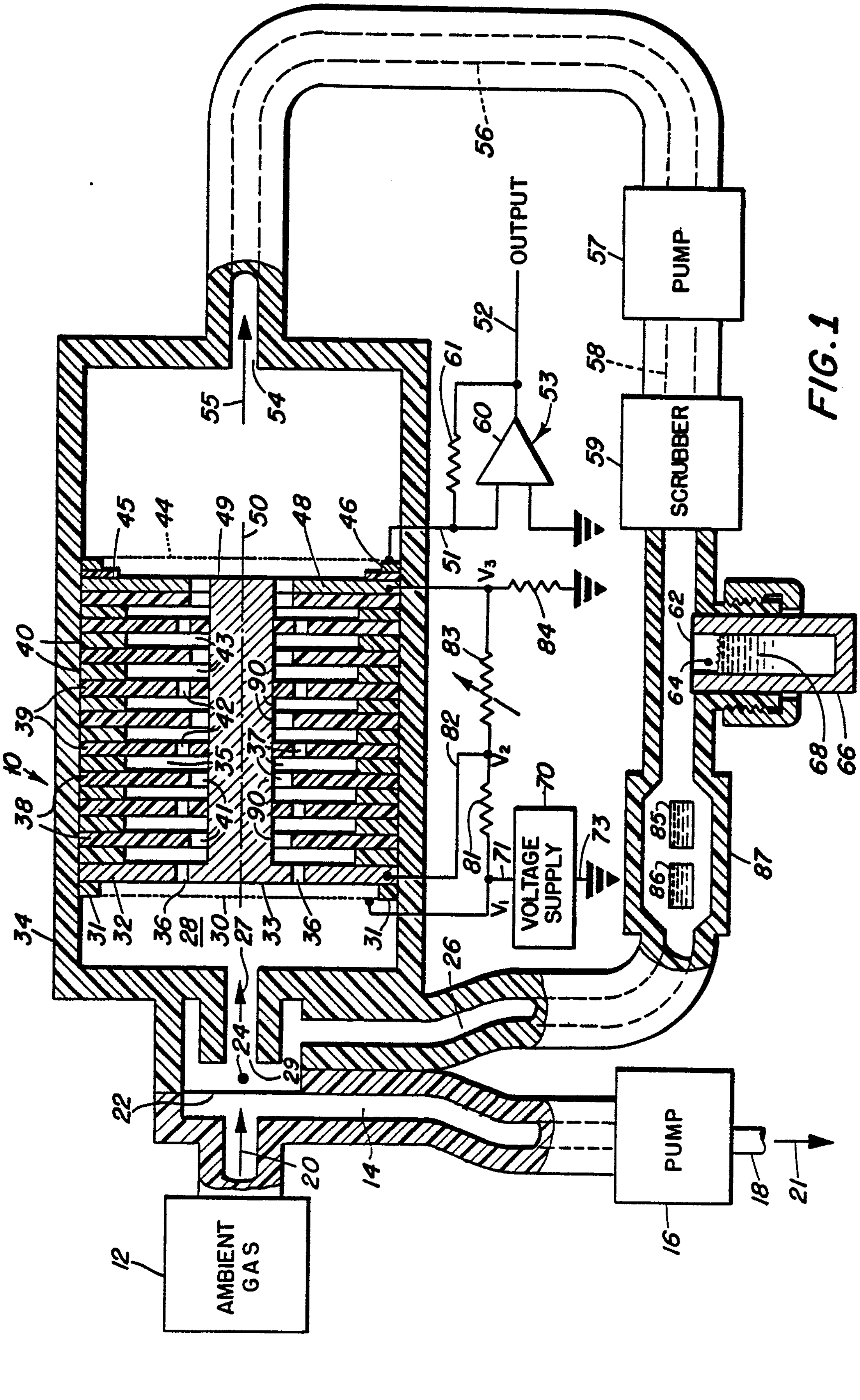
AMBIENT GAS
PUMP
PUMP
SCRUBBER
OUTPUT
VOLTAGE SUPPLY
$V_1$
$V_2$
$V_3$

FIG. 1

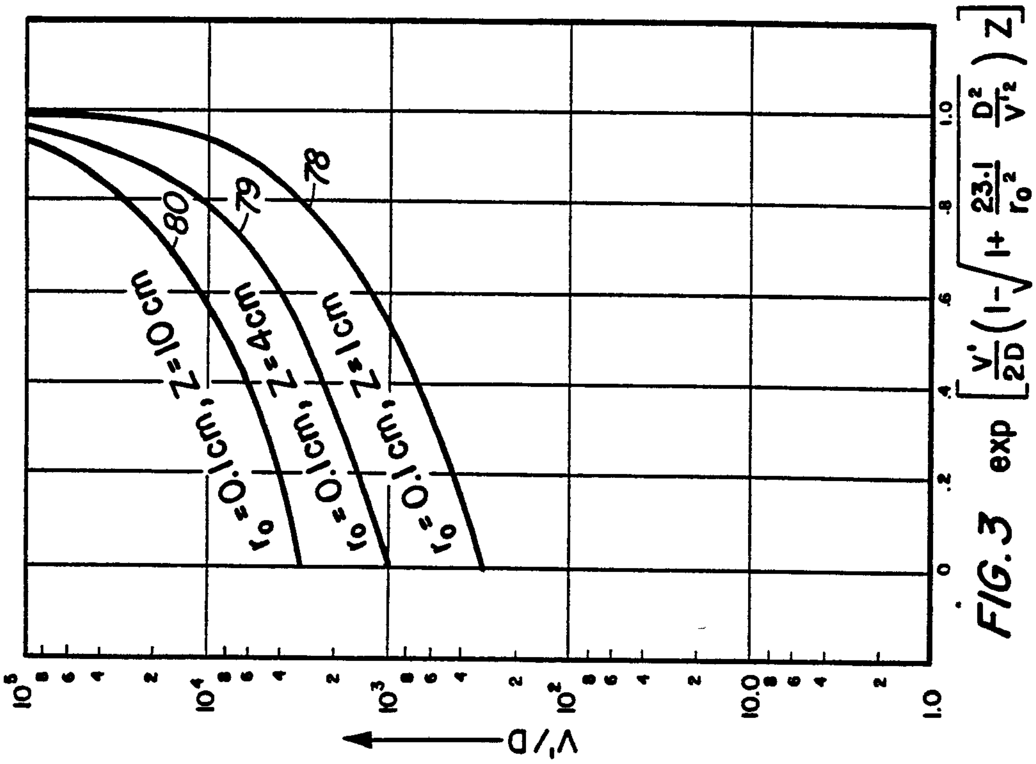

$r_o$ = 0.1cm, Z = 10cm
$r_o$ = 0.1cm, Z = 4cm
$r_o$ = 0.1cm, Z = 1cm
80
79
78
$10^5$
$10^4$
$10^3$
$10^2$
10.0
1.0
V'/D
0
.2
.4
.6
.8
1.0
exp $\left[\frac{V'}{2D}\left(1-\sqrt{1+\frac{23.1}{r_o^2}\frac{D^2}{V'^2}}\right)Z\right]$


FIG. 3

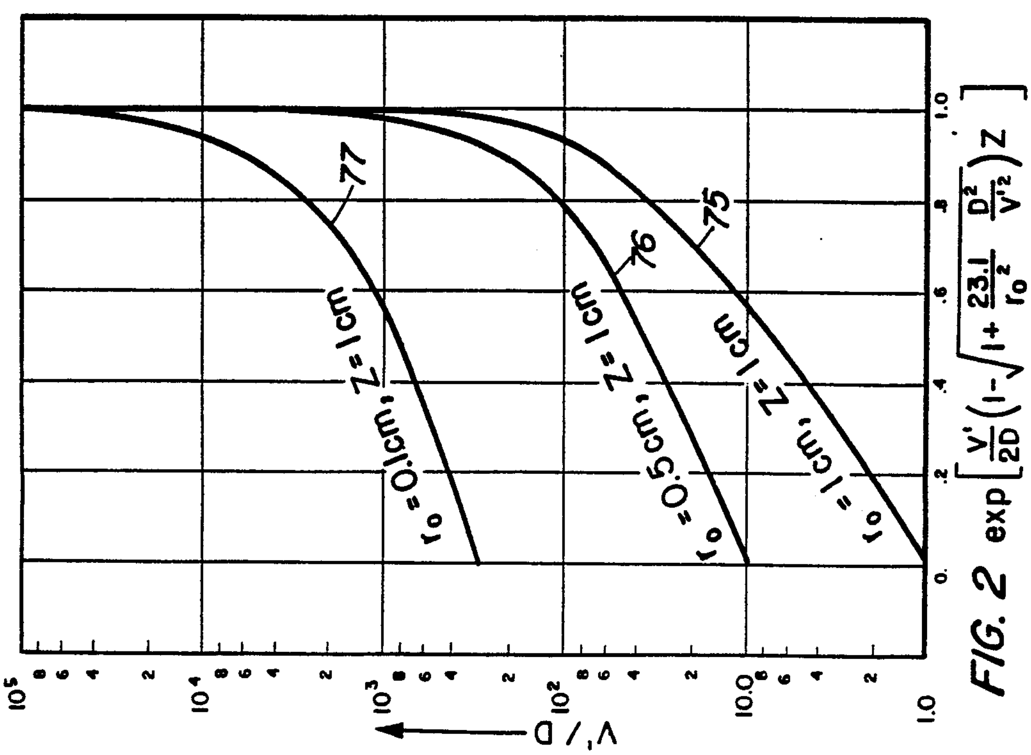

$r_o$ = 0.1cm, Z = 1cm
$r_o$ = 0.5cm, Z = 1cm
$r_o$ = 1cm, Z = 1cm
77
76
75
$10^5$
$10^4$
$10^3$
$10^2$
10.0
1.0
V'/D
0
.2
.4
.6
.8
1.0
exp $\left[\frac{V'}{2D}\left(1-\sqrt{1+\frac{23.1}{r_o^2}\frac{D^2}{V'^2}}\right)Z\right]$


FIG. 2